# EUROPÄISCHE PATENTSCHRIFT

(11) **EP 3 663 158 B1**
(45) Veröffentlichungstag und Bekanntmachung des Hinweises auf die Patenterteilung: **01.01.2025**
(21) Anmeldenummer: 19209542.0
(22) Anmeldetag: 15.11.2019
(51) Int. Cl.: B61D 23/02, B61D 19/00, B60R 3/02

(54) **SCHWENKSCHIEBETÜR MIT TRITTSYSTEM FÜR EIN FAHRZEUG**
SLIDING PLUG DOOR WITH STEP SYSTEM FOR A VEHICLE
PORTE COULISSANTE À BASCULEMENT AVEC SYSTÈME DE MARCHE POUR UN VÉHICULE

(30) Priorität: 04.12.2018 DE 202018106885 U
(43) Veröffentlichungstag der Anmeldung: 10.06.2020
(73) Patentinhaber: Bode - Die Tür GmbH, 34123 Kassel (DE)
(72) Erfinder: Thöne, Chris, 34123 Kassel (DE); Rasekhi Coochesfahani, Abbas, 34128 Kassel (DE); Arend, Ulrich, 34576 Dickershausen (DE)
(74) Vertreter: Patentanwälte Bauer Vorberg Kayser

(56) Entgegenhaltungen:
- CN-A- 105 818 824
- DE-A1- 2 057 365
- DE-C- 857 813
- FR-A1- 2 226 298
- FR-A1- 2 637 245
- JP-A- S59 220 448

## Beschreibung

Die vorliegende Erfindung betrifft eine Schwenkschiebetür für ein Fahrzeug, insbesondere ein Schienenfahrzeug, wobei die Schwenkschiebetür zumindest einen Türflügel aufweist und ein mit der Schwenkschiebetür zusammenwirkendes Trittsystem umfasst, wobei der Türflügel beim Öffnen und Schließen zumindest teilweise um eine mit dem Türflügel verbundene Drehsäule verschwenkt wird, und wobei das Trittsystem umfasst:
- eine als Schiebetritt ausgebildete Trittplatte, die im Wege einer Linearbewegung entlang einer Verschiebeachse reversibel von einer eingefahrenen Stellung in Richtung einer ausgefahrenen Stellung verschiebbar ist,
- und eine fahrzeugseitig angeordnete Führungsvorrichtung, in welcher die Trittplatte verschiebbar gelagert ist.

Derartige Schwenkschiebetüren samt der zugehörigen Trittsysteme werden vornehmlich bei Fahrzeugen zur Personenbeförderung eingesetzt. Infrage kommt beispielsweise eine Verwendung bei Straßenkraftfahrzeugen (z.B. Bussen) oder Schienenfahrzeugen (z.B. Straßenbahnen, U-Bahnen, Nah- und Fernverkehrszügen). Trittsysteme werden grundsätzlich zur Vereinfachung des Ein- und Aussteigens in ein solches Fahrzeug eingesetzt, sie dienen also als Einstiegshilfe. Während des Halts eines Fahrzeugs an einem Haltesteig, beispielsweise einem Bahnsteig, befindet sich das Fahrzeug in seiner Ruheposition, sodass die Fahrgäste in das Fahrzeug eintreten bzw. das Fahrzeug verlassen können. Dabei ist es nahezu unvermeidlich, dass im Türbereich zwischen der Fahrzeugaußenseite und dem Haltesteig bzw. Bahnsteig ein Spalt vorhanden ist. Anderenfalls würde es unweigerlich zu einem Materialkontakt zwischen der Fahrzeugaußenseite und dem Haltesteig bzw. Bahnsteig kommen, was zu einer Beschädigung des Fahrzeugs führen könnte, beispielsweise in Form von Blech- oder Lackschäden. Sofern nachfolgend vom Terminus "Bahnsteig" die Rede ist, ist die Erfindung nicht auf eine Verwendung in einem an Bahnsteigen halt machenden Schienenfahrzeug beschränkt, gleichsam kann es sich um einen Bussteig handeln, wenn das Trittsystem in einem Bus verwendet wird.

Ist ein solcher Spalt zu groß, kann dies eine Gefahr bzw. Beeinträchtigung für die Fahrgäste beim Ein- und Aussteigen in das Fahrzeug bzw. aus dem Fahrzeug darstellen. Entsprechend stellen Trittsysteme, die im Ruhezustand des Fahrzeugs in Richtung des Haltesteigs bzw. Bahnsteigs ausgefahren oder ausgeklappt werden, eine Möglichkeit dar, die Spaltgröße zwischen Fahrzeug und Haltesteig bzw. Bahnsteig zu reduzieren. Ein solches Trittsystem kann beispielsweise als Trittplatte oder Stufe ausgebildet sein und nimmt beim Zu- oder Aussteigen von Fahrgästen die Gewichtskraft der Fahrgäste auf.

Um eine hinreichende Trittsicherheit für die Fahrgäste zu gewährleisten, sowie eine möglichst lange Lebensdauer des Trittsystems bei Dauernutzung zu ermöglichen, ist erforderlich, dass das Trittsystem eine ausreichende mechanische Stabilität aufweist. Insbesondere eignen sich dazu Trittsysteme mit Trittplatten oder Trittflächen aus Metall. Des Weiteren können die Trittflächen mit Strukturen oder Matten versehen sein, die einen Anti-Rutscheffekt ausüben und die Rutschgefahr für den Fahrgast beim Ein- und Aussteigen reduzieren. Jedoch sind auch flexible Trittsysteme bekannt, beispielsweise offenbart die DE 10 2015 213 650 A1 ein in Teilbereichen oder als Ganzes elastisch verformbares Brückenelement zur Überbrückung eines Spalts zwischen dem Boden eines Schienenfahrzeugs und einem Bahnsteig.

Nebst der Verringerung der Spaltgröße zwischen Fahrzeug und Haltesteig bzw. Bahnsteig, eignen sich Trittsysteme auch zum Höhenausgleich zwischen dem Höhenniveau des Fahrgastraums und dem Haltesteig bzw. Bahnsteig. Sofern es sich um eine Ausbildung des Trittsystems als Schiebetritt handelt, kann der Schiebetritt zusätzlich auf das Höhenniveau des Haltesteigs bzw. Bahnsteigs abgesenkt oder angehoben werden. Auch können die Trittsysteme dahingehend ausgestaltet sein, dass sie in der Halteposition des Fahrzeugs unmittelbar auf dem Haltesteig bzw. Bahnsteig aufliegen.

Auf Schiebe- oder Klapptritten basierende Trittsysteme werden in der Regel durch eigens für das jeweilige Trittsystem vorgesehene (elektro)-motorische Antriebe ein- und ausgefahren, so zum Beispiel in der WO 2014/106581 A1 für das Beispiel eines Klapptrittsystems beschrieben. Gemäß der dortigen Offenbarung, sind die Antriebsmotoren für die Türblätter und den Klapptritt über eine gemeinsame Türsteuerungseinrichtung steuer- und regelbar.

Aus der DE 10 2004 009 900 A1 ist ferner eine einziehbare Türstufenanordnung zur Überbrückung einer Lücke zwischen einem Fahrgastraum und einer benachbarten Plattform bekannt. Die dortige Türstufenanordnung setzt sich aus einem Trittbrettteil und einem Verbindungsteil zusammen. Der Verbindungsteil ist mit einem Einziehmechanismus zur Hin- und Herbewegung der Türstufe zur benachbarten Plattform verbunden. Der Einziehmechanismus wird durch einen Elektromotor betätigt und bewegt die Türstufenanordnung von einer eingezogenen in eine vorragende Position.

Aus der DE 102 35 871 A1 ist ein Schiebetritt für Schienenfahrzeuge bekannt, der eine Trittkassette und einen in der Trittkassette wenigstens abschnittsweise aufnehmbaren und verschiebbar gelagerten Ausschub mit einer Trittfläche aufweist. Innerhalb der Trittkasette ist ein allseitig abgeschlossener, gegen eindringende Feuchtigkeit und Verschmutzung abgedichteter Trockenraum vorgesehen, in dem ein Antriebsmotor und eine Steuereinheit angeordnet sind.

Nachteilig an der Verwendung von Trittsystemen mit eigenem Antrieb ist die Notwendigkeit die Antriebe regelmäßig zu warten. Somit sind bei der Verwendung eines solchen Trittsystems zusammen mit einem Schwenkschiebetürsystem nicht nur die Antriebe des Schwenkschiebetürsystems (also jene Antriebe, die die Schwenkschiebebewegung der Türflügel ausführen) zu warten, sondern auch der Antrieb des Trittsystems selbst. Dadurch steigt sowohl der Wartungsaufwand als auch die Wartungskosten.

Mit der Verwendung eines eigenen für das Trittsystem vorgesehenen Antrieb geht einher, dass eine Reihe elektronischer Bauteile im Bereich des Trittsystems verbaut sind. Diese regelmäßig zu reinigen ist einerseits für eine hinreichende Funktionalität und andererseits für eine zu gewährleistende Betriebssicherheit unabdingbar. Gerade vor dem Hintergrund, dass sich im Bodenbereich einer Fahrzeugtüre, also an der Grenze vom Fahrzeuginneren zum Fahrzeugäußeren, Schmutz und Feuchtigkeit akkumulieren kann, ist es wesentlich einen solchen Antrieb regelmäßig zu reinigen. Auch dies ist mit einem regelmäßigen Arbeits- und Kostenaufwand verbunden. Zwar ergibt sich diese Problematik bei eigens abgedichteten Antrieben nicht (siehe z.B. den Offenbarungsgehalt der DE 102 35 871 A1), jedoch müssen auch solche "abgedichteten" Antriebe regelmäßig einer zusätzlichen Wartung unterzogen werden.

Eigens für die Trittsysteme vorgesehene Antriebe sind zudem mit einem zusätzlichen Raumbedarf und Gewicht verbunden, sprich sie sie nehmen aufgrund ihrer Baugröße zusätzlichen Raum ein. Dies wirkt sich negativ auf die Ökobilanz des Fahrzeugs aus, denn gerade Schienenfahrzeuge weisen eine Reihe von Türen und somit auch eine Reihe einzelner Trittsysteme samt Antrieben auf, wodurch bei Verwendung von baulich großen Trittsystemen das Gesamtgewicht des Fahrzeugs erhöht wird. Daraus resultiert ein erhöhter Energieverbrauch im Vergleich zu einem leichteren Fahrzeug (sei es elektrische Energie oder Verbrennungsenergie).

Weiterhin ist bei den gängigen mit eigenem Antrieb ausgestatteten Trittsystemen von Nachteil, dass diese nur unter relativ großen Aufwand austauschbar sind. Denn dazu müssen sie entweder zusammen mit dem Antrieb ausgebaut oder von diesem getrennt werden. Eine schnelle Austauschbarkeit ist jedoch gerade bei jenen Bauteilen wünschenswert, die einer dauerhaften Belastung bzw. Beanspruchung ausgesetzt sind. Trittsysteme, die bei nahezu jedem Haltevorgang des Fahrzeugs Trittbelastungen der Fahrgäste ausgesetzt sind, stellen ein prominentes Beispiel eines dauerhaft belasteten Bauteils dar, welches nach einer gewissen Betriebszeit oder bei Beschädigung ausgewechselt werden sollte.

Weiterhin sei auf die FR 2 226 298 A1 hingewiesen, die ein Trittsystem für eine Schwenkschiebetüre offenbart. Die dem Trittsystem zugehörige Trittplatte ist über eine Gelenkanordnung mit einer Drehsäule verbunden. Somit bewirkt eine Drehbewegung der Drehsäule eine über die Funktionselemente übertragene Linearverschiebung der Trittplatte. Die CN 105 818 824 A offenbart eine Trittplatte, die gegenüber einem Fahrzeug verschiebbar ist, wobei die Trittplatte zwischen einem Fahrzeugboden und einer Bodenplatte angeordnet und in einer Führungsvorrichtung verschiebbar gelagert ist. Die Linearverschiebung der Trittplatte wird über eine Gelenkanordnung verwirklicht, die sowohl an einer Drehsäule der Fahrzeugtür als auch an der Trittplatte angelenkt ist.

Entsprechend liegt der vorliegenden Erfindung die **Aufgabe** zugrunde, eine Schwenkschiebetür für ein Fahrzeug, insbesondere ein Schienenfahrzeug, bereitzustellen, bei welcher eine vereinfachte Wartung, Reinigung und Austauschbarkeit des zugehörigen Trittsystems ermöglicht ist.

Zur **Lösung** dieser Aufgabe wird eine Schwenkschiebetür mit den Merkmalen des Anspruchs 1 vorgeschlagen.

Die Erfindung betrifft eine Schwenkschiebetür für ein Fahrzeug, insbesondere ein Schienenfahrzeug, wobei die Schwenkschiebetür zumindest einen Türflügel aufweist und ein mit der Schwenkschiebetür zusammenwirkendes Trittsystem umfasst, wobei der Türflügel beim Öffnen und Schließen zumindest teilweise um eine mit dem Türflügel verbundene Drehsäule verschwenkt wird, und wobei das Trittsystem umfasst: eine als Schiebetritt ausgebildete Trittplatte, die im Wege einer Linearbewegung entlang einer Verschiebeachse reversibel von einer eingefahrenen Stellung in Richtung einer ausgefahrenen Stellung verschiebbar ist, und eine fahrzeugseitig angeordnete Führungsvorrichtung, in welcher die Trittplatte verschiebbar gelagert ist. Die Trittplatte ist über eine Gelenkanordnung mit zumindest einer Drehsäule verbunden. Über die Gelenkanordnung ist eine Drehbewegung der Drehsäule in die Linearbewegung der Trittplatte übertragbar. Die Gelenkanordnung umfasst ein Verbindungsglied, eine Verbindungswelle, ein erstes und ein zweites Kardangelenk, sowie ein die Kardangelenke verbindendes Gestänge. Das Verbindungsglied ist ein metallisches Flachprodukt. Im Bereich seines ersten Endes sowie seines zweiten Endes weist es eine erste Lochöffnung respektive eine zweite Lochöffnung auf, wobei das Verbindungsglied im Bereich der ersten Lochöffnung mit der Trittplatte verbunden ist. Die Verbindungswelle ist senkrecht zu dem Verbindungsglied angeordnet und greift mit ihrem einen Ende in die zweite Lochöffnung des Verbindungsgliedes ein.

Das Trittsystem eignet sich insbesondere zur Verwendung in einem Schienenfahrzeug, beispielsweise einem Nah- oder Fernverkehrszug zur Personenbeförderung. Das Trittsystem wirkt mit einer zumindest einen Türflügel aufweisenden Schwenkschiebetür zusammen, deren Türflügel beim Öffnen und Schließen zumindest teilweise um eine mit dem Türflügel verbundene Drehsäule verschwenkt wird. Entsprechend erstreckt sich entlang der Drehsäule eine Drehachse, um welche der Türflügel zumindest teilweise verschwenkt wird. Das Trittsystem kann mit einer einflügeligen Schwenkschiebetüre, vorzugsweise aber mit einer zweiflügeligen Schwenkschiebetüre zusammenwirken. Bei Verwendung des Trittsystems in Verbindung mit einer zweiflügeligen Schwenkschiebetüre, werden folglich beide Türflügel der Schwenkschiebetüre beim Öffnen und Schließen zumindest teilweise um eine mit dem jeweiligen Türflügel verbundene Drehsäule verschwenkt. Jedem der Türflügel ist also eine Drehsäule zugeordnet. Die nachfolgende Erfindungsbeschreibung richtet sich insbesondere auf eine Verwendung des Trittsystems mit einer zweiflügeligen Schwenkschiebetüre, schließt eine Verwendung mit einer einflügeligen Schwenkschiebetüre jedoch keineswegs aus.

Das Trittsystem umfasst eine Trittplatte, die im Wege einer Linearbewegung entlang einer Verschiebeachse reversibel von einer eingefahrenen Stellung in Richtung einer ausgefahrenen Stellung verschiebbar ist. Reversible Verschiebbarkeit meint in diesem Kontext, dass die Trittplatte sowohl von der eingefahrenen Stellung in Richtung der ausgefahrenen Stellung verschoben werden kann, als auch von der ausgefahrenen Stellung in Richtung der eingefahrenen Stellung. Die Verschiebung der Trittplatte von der eingefahrenen Stellung in Richtung der ausgefahrenen Stellung wird durch die beim Öffnen der Schwenkschiebetüre stattfindende Drehbewegung der zumindest einen Drehsäule bewirkt. Ebenso wird die Verschiebung der Trittplatte von der ausgefahrenen Stellung in die eingefahrene Stellung von der beim Schließen der Schwenkschiebetüre stattfindenden Drehbewegung der zumindest einen Drehsäule bewirkt.

Bei der Trittplatte handelt es sich um einen Schiebetritt. Die Trittplatte kann auch nach Art einer Trittleiste ausgebildet sein. Weiterhin umfasst das Trittsystem eine fahrzeugseitig angeordnete Führungsvorrichtung, in welcher die Trittplatte verschiebbar gelagert ist.

Zugleich ist die Trittplatte über eine Gelenkanordnung mit zumindest einer Drehsäule verbunden. Im Falle einer zweiflügeligen Schwenkschiebetüre, ist die Trittplatte vorzugsweise über zwei separate Gelenkanordnungen mit den jeweiligen Drehsäulen verbunden. Über die Gelenkanordnung(en) ist eine Drehbewegung der Drehsäule in die Linearbewegung der Trittplatte übertragbar. Somit bewirkt eine Rotation der Drehsäulen beim zumindest teilweisen Verschwenken der Türflügel eine Verschiebung der Trittplatte entlang der Verschiebeachse.

Mit Blick auf die aus dem Stand der Technik bekannten Trittsysteme, unabhängig davon, ob es sich um Schiebe- oder Klapptrittsysteme handelt, liegt der entscheidende Vorteil des mit der vorliegenden Erfindung vorgeschlagenen Trittsystems darin, dass auf einen eigens für das Trittsystem vorgesehenen (elektro)-motorischen Antrieb verzichtet werden kann. Das Trittsystem kann erfindungsgemäß über die ohnehin am Schwenkschiebetürsystem vorhandene Mechanik bzw. den dort vorhandenen Antrieb zur Ausführung der Schwenk- und Schiebebewegung der Türflügel, aus- und eingefahren werden. Die mechanische Drehbewegung der Drehsäule(n) wird dabei in eine Linearbewegung der Trittplatte übertragen. Drehsäule(n) und Trittplatte werden also über einen gemeinsamen Antrieb in Bewegung gesetzt.

Wie bereits vorangehend erwähnt, eignet sich das erfindungsgemäße Trittsystem insbesondere zur Verwendung mit zweiflügeligen Schwenkschiebetürsystemen, schließt aber eine Verwendung mit einflügeligen Schwenkschiebetüren nicht aus. Wesentlicher Bestandteil eines solchen zweiflügeligen Schwenkschiebetürsystems sind die Türflügel bzw. Türblätter, die ausgehend von einer geschlossenen Stellung mittels einer Antriebseinrichtung in eine geöffnete Stellung bewegt werden können. Die beiden Türflügel einer zweiflügeligen Schwenkschiebetüre sind in der Regel jeweils über geeignete Schwenkhebel an einer sich vertikal erstreckenden Drehsäule befestigt sein. Die Drehsäule ist vorzugsweise über eine elektromechanische Antriebseinrichtung und eine Lagerstelle mit dem Fahrzeug verbunden. Weiterhin sind die Türflügel in an sich bekannter Weise gegenüber einem Türrahmen bzw. gegenüber dem Fahrzeug durch eine Führungseinheit geführt, insbesondere um den Verschiebeanteil bei der Schwenkschiebebewegung zu erlauben. Für jeden Türflügel kann eine eigene Antriebseinrichtung vorgesehen sein, gleichsam können die Drehsäulen beider Türflügel aber auch mit einer gemeinsamen Antriebseinrichtung angetrieben werden.

Aus dem Stand der Technik ist bekannt, dass Drehsäulen beispielsweise mit elektromechanischen Antriebseinrichtung um eine Drehachse drehbar sind. Die Drehachse fällt dabei mit der Längsachse der Drehsäule zusammen. Eine Drehung der Drehsäule bewirkt eine Rotation und/oder Verschiebung des der jeweiligen Drehsäule zugeordneten Türflügels. In der Regel öffnen und schließen die Türflügel gleichförmig und synchron. Gleichzeitig oder nachgelagert zur Schwenkbewegung der Türflügel, können diese mittels einer Führungseinheit entlang der Fahrzeuglängsachse verschoben werden. Dazu können die Türflügel mit Führungselementen (z.B. Rollen) in eine die Führungseinheit bereitstellende Führungsschiene eingehangen sein. In diesem Fall handelt es sich um eine Rollenführung der Türflügel. Bekannt ist ferner die Verwendung von Gleitführungen. Beim Öffnen einer zweiflügligen Schwenkschiebetüre werden die Türflügel beim Öffnen entlang der Fahrzeuglängsachse synchron und gleichförmig voneinander wegbewegt, sie werden also in entgegengesetzter Richtung verschoben. Beim Schließen bewegen sich die Türflügel hingegen synchron und gleichförmig aufeinander zu.

Das erfindungsgemäße Trittsystem wirkt mit dem vorangehend beschriebenen Schwenkschiebetürsystem zusammen, indem die Trittplatte beim Öffnen der Türflügel aus einer eingefahrenen Stellung ausgefahren wird, um die Spaltbreite zwischen Fahrzeug und Bahnsteig zu reduzieren und eine Trittfläche für den Fahrgast bereitzustellen. Dieser Vorgang ist reversibel, d.h. das Trittsystem wird beim Schließen der Türflügel von der ausgefahrenen Stellung zurück in die eingefahrene Stellung verschoben.

Häufig weisen Trittsysteme - die bekanntermaßen als Schiebetrittsystem oder Klapptrittsystem ausgeführt sein können - einen eigenen elektromotorischen Antrieb auf. Erfindungsgemäß kann auf einen solchen zusätzlichen Antrieb für das Trittsystem verzichtet werden.

Durch die Möglichkeit auf einen separaten Antrieb für das Trittsystem zu verzichten, wird der Raumbedarf des Trittsystems reduziert, wodurch eine kompakte und modulare Bauweise ermöglicht wird. Eine modulare Bauweise erlaubt einen einfachen und schnellen Austausch bzw. Aus- und Einbau des Trittsystems, beispielsweise zum Zwecke einer Reparatur oder aufgrund von irreparablen Schäden. Bei Verzicht auf einen zusätzlichen Antrieb wird zudem die Reinigung des Trittsystems vereinfacht. Durch den Verzicht auf einen zusätzlichen Antrieb für das Trittsystem entbehrt sich die Verwendung einer Vielzahl zusätzlicher elektronischer Bauteile und Verkabelungen, die die Reinigung des Trittsystems grundsätzlich erschweren.

Nicht zuletzt sei betont, dass durch den Verzicht auf einen zusätzlichen Antrieb und die Ausnutzung einer bereits im Schwenkschiebetürsystem vorhandenen Mechanik zum Betrieb des Trittsystems, der Wartungsaufwand des Trittsystems erheblich reduziert wird. Es müssen letztlich nur die Mechanik des Schwenkschiebetürsystems bzw. der Drehsäulen sowie die entsprechenden Anbindungsstellen des Trittsystems gewartet werden. Eine aufwendige Wartung eines eigens für das Trittsystem vorgesehenen Antriebs wird somit vermieden.

Weitere vorteilhafte Ausgestaltungen der Erfindung sind in den Unteransprüchen angegeben. Diese vorteilhaften Ausgestaltungen sind nachfolgend genauer erläutert. Ferner sei nachfolgend auf aus dem Stand der Technik bekannte Merkmale Bezug genommen, die in Verbindung mit der erfindungsgemäßen Schwenkschiebetür verwendet werden können.

Wie bereits erwähnt, bildet die Trittplatte einen Schiebetritt aus. Durch die Verwendung eines Schiebetrittsystems lässt sich, im Gegensatz zu einem Klapptrittsystem, die Ausfahrweite der Trittplatte gut kontrollieren.

Die Ausfahrweite der Trittplatte hängt erfindungsgemäß von der ausgeführten Rotation der Drehsäule ab, also vom Drehwinkel. In vorteilhafter Weise befindet sich die Trittplatte in ihrer vollständig ausgefahrenen Stellung, wenn die Türflügel der Schwenkschiebetüre vollständig geöffnet sind. Entsprechend korrespondiert der für eine vollständige Öffnung der Türflügel erforderliche Drehwinkel der Drehsäule zu jenem Drehwinkel der Drehsäule, der ein Verschieben der Trittplatte in ihre vollständig ausgefahrene Stellung bewirkt.

Nach einer vorteilhaften Ausgestaltung der Erfindung ist vorgesehen, dass sich die Trittplatte in der ausgefahrenen Stellung befindet, sofern die zumindest eine Drehsäule ausgehend von einer zur geschlossenen Stellung des zumindest einen Türflügels korrespondierenden Drehposition um einen Drehwinkel gedreht ist, bevorzugt um einen Drehwinkel von 40°-60°, und besonders bevorzugt um einen Drehwinkel von 50°. Dabei korrespondiert eine um 50° gedrehte Drehsäule zu einem vollständigen Ausfahren der Trittplatte. Beachtet sei, dass die Angaben der Drehwinkel technisch bedingte Toleranzbereiche einschließen.

Mit dem beschriebenen Trittsystem kann die Trittplatte auch nur teilweise ausgefahren werden, beispielsweise wenn der Abstand zum Haltesteig geringer als die maximale Ausfahrweite des Trittsystems ist. In diesem Fall wäre der Drehwinkel der Drehsäule kleiner als 50°.

Eine vorteilhafte Ausgestaltung kann darin liegen, dass in der Trittplatte oder am Fahrzeug Abstandssensoren vorgesehen werden, die den Abstand des Fahrzeugs vom Haltesteig erfassen. In Abhängigkeit des erfassten Abstandes kann eine gewünschte Ausfahrweite steuer- und regelungstechnisch verwirklicht werden.

Nach einer weiteren vorteilhaften Ausgestaltung der Erfindung kann zwischen der Drehsäule und der Trittplatte eine Entkopplungseinrichtung vorgesehen sein, die dazu eingerichtet ist, ein Blockieren der Drehsäule bei Erreichen einer definierten Ausfahrweite der Trittplatte und/oder beim Anschlagen der Trittplatte an einem Haltesteig zu verhindern. Dies ist entscheidend, um eine vollständige Öffnung der Türflügel bei nicht-vollständigem Ausfahren der Trittplatte zu gewährleisten. Anderenfalls könnte beispielsweise beim Anstoßen der Trittplatte an dem Haltesteig bzw. Bahnsteig der Türöffnungsvorgang unterbrochen bzw. blockiert werden. Die Entkopplungseinrichtung kann mechanischer Natur sein und im Bereich der Gelenkanordnung ausgebildet sein, gleichermaßen kann die Entkopplungseinrichtung an der Drehsäule ausgebildet sein.

Wie bei bekannten Trittsystemen, stellt auch die Trittplatte des hiesigen Trittsystems in der ausgefahrenen Stellung eine Trittfläche zwischen einer Außenseite des Fahrzeugs und einem Haltesteig, beispielsweise einem Bahn- oder Bussteig, bereit. Ein Fahrgast kann die Trittfläche beim Einsteigen oder Aussteigen die Trittfläche als Einstiegshilfe nutzen und mit seinem Körpergewicht voll belasten. Die Trittfläche dient entsprechend als Zwischenstufe zum erleichterten Eintreten in das Fahrzeug. Mittels der Trittplatte kann ein zwischen dem Fahrzeug und dem Haltesteig vorherrschender Spalt von einer ersten Spaltbreite auf eine zweite Spaltbreite reduziert werden. Durch eine geringere Spaltbreite sinkt die Gefahr, dass ein zu- oder aussteigender Fahrgast beim Ein- oder Aussteigen über den Spalt stolpert, im Spalt hängen bleibt oder sich anderweitig verletzt. Damit wird die Sicherheit der Fährgäste beim Ein- und Aussteigen inhärent verbessert.

Wie grundsätzlich aus dem Stand der Technik bekannt, kann auch die Führungsvorrichtung des mit der vorliegenden Erfindung beanspruchten Trittsystems unterhalb der Trittplatte im Bereich des Schwenkschiebetürsystems angeordnet und positionsfest mit dem Fahrzeug verbunden sein. Eine positionsfeste Anbindung der Führungsvorrichtung an das Fahrzeug bewirkt eine stabile und sichere Lagerung der Trittplatte, insbesondere während der Fahrt. Die Führungsvorrichtung kann mit einer zusätzlichen Arretiervorrichtung ausgestattet sein, vermöge dessen eine zusätzliche Befestigung und Sicherung der Trittplatte - beispielsweise während der Fahrt - gewährleistet werden kann. Weiterhin kann vorgesehen sein, dass die Trittplatte unterhalb einer Bodenbedeckung des Fahrzeuginnenraums angeordnet ist. Dadurch ist die Trittplatte für den während der Fahrt im Fahrgastraum des Fahrzeugs befindlichen Fahrgast nicht sichtbar und kann somit für den Fahrgast keine optisch-ästhetische Beeinträchtigung darstellen. Ferner sorgt die Anordnung der Trittplatte unterhalb der Bodenbedeckung dafür, dass die Trittplatte während der Fahrt keinen Trittbelastungen ausgesetzt und vor Feuchtigkeit und Schmutz geschützt ist.

Die Verschiebeachse der Trittplatte kann sich, wie bei bekannten Trittsystemen, quer zur Fahrzeuglängsrichtung erstrecken. Dadurch ist die Verschiebbarkeit der Trittplatte in Richtung eines parallel zum Fahrzeug verlaufenden Haltesteigs bzw. Bahnsteigs gewährleistet, also quer zur Fahrzeuglängsrichtung.

Führungsvorrichtungen als Gleitlager auszubilden ist grundsätzlich aus dem Stand der Technik bekannt. Entsprechend kann auch die Führungsvorrichtung des mit der Erfindung beanspruchten Trittsystems ein Gleitlager sein. Das Gleitlager kann zusammengesetzt sein aus fahrzeugfest angeordneten Führungsschienen und an der Trittplatte angeordneten Führungselementen, die in die Führungsschienen eingreifen. Durch den Eingriff der Führungselemente in die Führungsschienen ist die Trittplatte gegen die Einwirkung von quer zur Verschiebeachse wirkenden Kräften gesichert, insbesondere hinsichtlich einer möglichen Positionsverschiebung.

Ebenso kann vorgesehen sein, dass sich das Gleitlager aus einer Führungsbuchse und einem in der Führungsbuchse geführten Führungsholm zusammensetzt, wobei die Führungsbuchse an der Trittplatte und der Führungsholm fahrzeugfest angeordnet ist oder umgekehrt. Grundsätzlich kann das Gleitlager auch auf andere bekannte Art und Weise ausgestaltet sein, beispielsweise als schwimmendes Stützlager. Die Auswahl der konkreten Ausgestaltung des Gleitlagers kann an die baulichen Gegebenheiten des Fahrzeugs angepasst werden.

Alternativ kommt auch eine Ausbildung der Führungsvorrichtung als Rollenlagerung in Betracht. Zwar sind auch solche Lager grundsätzlich bekannt, nicht jedoch in Verbindung mit dem erfindungsgemäßen Trittsystem. Dazu kann beispielsweise auf der Unterseite der Trittplatte eine Rollenhalterung samt geeigneten Rollen vorgesehen sein, wobei die Rollen in eine fahrzeugfeste Rollenführung, beispielsweise in Form von Führungsschienen, eingreifen kann.

Nach einer vorteilhaften Ausgestaltung umfasst die Gelenkanordnung ein Verbindungsglied, eine Verbindungswelle, ein erstes und ein zweites Kardangelenk, sowie ein die Kardangelenke verbindendes Gestänge. Auf eine konkrete Ausgestaltungsvariante der genannten Gelenkanordnung sei im Folgenden genauer Bezug genommen. Ausdrücklich sei erwähnt, dass die nachfolgend beschriebene Gelenkanordnung auch auf andere Art und Weise ausgebildet sein kann und nicht auf die erwähnten Komponenten festgelegt ist. Wird das Trittsystem in Verbindung mit einer zweiflügeligen Schwenkschiebetüre verwendet, so sind entsprechend zwei Gelenkanordnungen vorgesehen, die die jeweilige Drehsäule mit der Trittplatte verbinden.

Nach einer vorteilhaften Ausgestaltung der Erfindung kann das Verbindungsglied ein metallisches Flachprodukt sein. Beispielsweise kann das Verbindungsglied aus Metallblech gefertigt sein. Als Fertigungsmethode kommt eine Fertigung als Schmiede- oder Gussteil in Betracht. Im Bereich seines ersten Endes sowie seines zweiten Endes kann das Verbindungsglied eine erste Lochöffnung respektive eine zweite Lochöffnung aufweisen. Die erste Lochöffnung ist vorzugsweise als Langloch ausgebildet. Die Lochöffnungen können nach der Fertigung bzw. nach dem Umformen des Verbindungsgliedes in dieses eingestanzt werden. Ferner ist das Verbindungsglied erfindungsgemäß im Bereich der ersten Lochöffnung mit der Trittplatte verbunden. Dazu kann beispielsweise kann an der Trittplatte ein Bolzen oder Verbindungsflansch vorgesehen sein, der in die erste Lochöffnung des Verbindungsglieds eingreift. Die Längsachse des Verbindungsglieds erstreckt sich orthogonal zur Drehachse der Drehsäule. Anders ausgedrückt, erstreckt sich das Verbindungsglied in einer Horizontalebene.

Nach einer weiteren vorteilhaften Ausgestaltung der Erfindung ist die Verbindungswelle senkrecht zu dem Verbindungsglied angeordnet und greift mit ihrem einen Ende in die zweite Lochöffnung des Verbindungsgliedes ein. In diesem Bereich ist die Verbindungswelle drehfest mit dem Verbindungsglied verbunden.

Nach einer weiteren Ausgestaltung der Erfindung ist das erste Kardangelenk mit einem anderen Ende der Verbindungswelle sowie mit einem ersten Ende eines Gestänges verbunden. Das zweite Kardangelenk ist mit einem zweiten Ende des Gestänges sowie mit der Drehsäule verbunden. Das Gestänge kann relativ zu der Verbindungswelle um einen Winkel geneigt sein, bevorzugt um einen Winkel von 30°-60°, weiter bevorzugt um einen Winkel von 40°-50°, und besonders bevorzugt um einen Winkel von 45°. Die Anordnung aus Kardangelenken, Gestänge und Verbindungswelle dient dem Winkelausgleich zwischen der Drehsäule und Verbindungsglied. Die Anordnung dient ferner der Übertragung des Drehsäulen-Drehmoments auf das Verbindungsglied und somit der Übersetzung der Rotationsbewegung der Drehsäule in die Linearbewegung der Trittplatte.

Eine beim Öffnen der Türflügel ausgeführte Drehbewegung der Drehsäulen wird über die Anordnung aus erstem und zweiten Kardangelenk sowie dem Gestänge auf die Verbindungswelle übertragen, die infolgedessen ebenfalls in eine Drehbewegung versetzt wird. Aufgrund der drehfesten Verbindung zwischen Verbindungswelle und Verbindungsglied führt eine Drehbewegung der Verbindungswelle zu einer Rotation des Verbindungsgliedes. Das Verbindungsglied rotiert mit der Verbindungswelle mit. Ausgehend von der eingefahrenen Stellung der Trittplatte, führt eine Drehbewegung der Drehsäule bzw. der damit wirkverbundenen Verbindungswelle zu einer Rotationsbewegung des Verbindungsgliedes. Selbiges gilt für eine ausgehend von der ausgefahrenen Stellung der Trittplatte in Richtung der eingefahrenen Stellung ausgeführte Verschiebebewegung, bei der jedoch der Drehsinn der Drehsäule im Vergleich zum Ausfahren der Trittplatte umgekehrt ist.

Weitere Einzelheiten der Erfindung sind anhand eines nachfolgend beschriebenen und in den Figuren dargestellten Ausführungsbeispiels genauer erläutert. Die Figuren zeigen
- Fig. 1: eine perspektivische (Teil-)Ansicht des erfindungsgemäßen Trittsystems in seiner ausgefahrenen Stellung;
- Fig. 2: eine perspektivische (Teil-)Ansicht des erfindungsgemäßen Trittsystems in seiner eingefahrenen Stellung im Anbindungsbereich an eine Drehsäule;
- Fig. 3: eine schematische Draufsicht eines Teilausschnitts des erfindungsgemäßen Trittsystems in seiner eingefahrenen Stellung;
- Fig. 4: eine schematische Draufsicht eines Teilausschnitts des erfindungsgemäßen Trittsystems in seiner ausgefahrenen Stellung;
- Fig. 5: eine stark schematisierte Schnittansicht des erfindungsgemäßen Trittsystems in seiner eingefahrenen Stellung, beim Halten eines Fahrzeugs neben einem Haltesteig;
- Fig. 6: eine stark schematisierte Schnittansicht des erfindungsgemäßen Trittsystems in seiner (teilweise) ausgefahrenen Stellung, beim Halten eines Fahrzeugs neben einem Haltesteig.

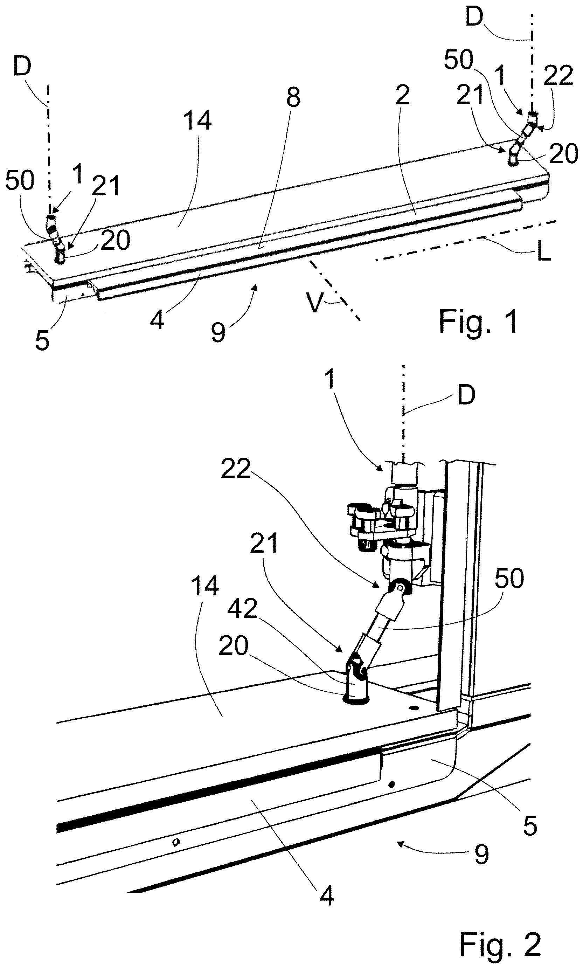

Die Figur 1 illustriert in einer schematischen Ansicht das erfindungsgemäße Trittsystem für ein Fahrzeug. In den nachfolgenden Ausführungen sei beispielhaft auf ein Trittsystem Bezug genommen wie es bei Schwenkschiebetürsystemen von Schienenfahrzeugen zum Einsatz kommt. Ausdrücklich sei an dieser Stelle betont, dass das erfindungsgemäße Trittsystem nicht auf den Einsatz bei Schienenfahrzeugen beschränkt ist. Gleichsam können Schwenkschiebetürsysteme samt den erfindungsgemäßen Trittsystemen beispielsweise auch bei anderen Fahrzeugen des öffentlichen Nah- und Fernverkehrs eingesetzt werden, beispielsweise bei Bussen.

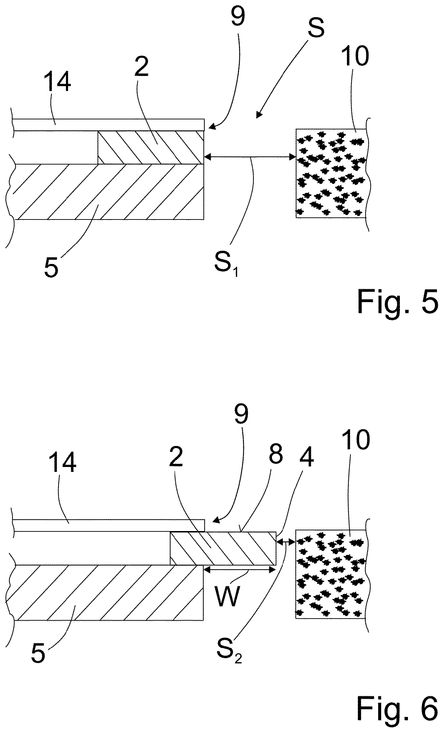

Grundsätzlich dient ein solches Trittsystem dazu einen beim Halt des Schienenfahrzeugs zwischen dem Türbereich und einem Haltesteig bzw. Bahnsteig vorhandenen Spalt zu verringern und eine Trittfläche 8 für den Fahrgast beim Ein- oder Aussteigen in das Fahrzeug bzw. aus dem Fahrzeug bereitzustellen. Die Gefahr, dass ein Fahrgast beim Ein- oder Aussteigen in dem zwischen Türe und Bahnsteig vorhandenen Spalt S (siehe Fig. 5, 6) stolpert, hängen bleibt oder sich verletzt, wird durch das die Spaltweite verringernde Trittsystem reduziert.

Wesentlicher Bestandteil eines Schwenkschiebetürsystems sind dessen Türflügel bzw. Türblätter, die ausgehend von einer geschlossenen Stellung vermöge einer Antriebseinrichtung in eine geöffnete Stellung bewegt werden können. Schwenkschiebetürsysteme können dabei einflügelig oder zweiflügelig ausgebildet sein, also entweder einen oder zwei Türflügel aufweisen. Diese sind in den Figuren zwar nicht dargestellt, aus Verständnisgründen sei trotzdem an dieser Stelle auf das Schwenkschiebetürsystem Bezug genommen.

Das erfindungsgemäße Türsystem eignet sich insbesondere zur Verwendung mit zweiflügeligen Türsystemen. In der geschlossenen Stellung liegen die Türflügel üblicherweise in der Fahrzeugwand, schließen also mit der Außenseite des Fahrzeugs bündig ab. In der geöffneten Stellung liegen die Türflügel in der Regel außen vor der Fahrzeugwand. Der Öffnungs- und Verschließvorgang wird vornehmlich beim Halten des Fahrzeugs ausgeführt. Die Türflügel können jeweils über geeignete Schwenkhebel an einer sich vertikal erstreckenden Drehsäule 1 befestigt sein. Die Drehsäule 1 kann beispielsweise an ihrem oberen Ende über eine elektromechanische Antriebseinrichtung mit dem Fahrzeug verbunden. Weiterhin sind die jeweiligen Türflügel in bekannter Weise gegenüber einem Türrahmen bzw. gegenüber dem Fahrzeug durch eine Führungseinheit geführt.

Die Drehsäule 1 ist von der elektromechanischen Antriebseinrichtung um eine Drehachse D drehbar. Die Drehachse D fällt mit der sich in Vertikalrichtung erstreckenden Längsachse der Drehsäule 1 zusammen. Der untere Teil der Drehsäule 1 samt Drehachse D ist in den Figuren 1 und 2 angedeutet. Eine Drehung der Drehsäule 1 bewirkt - vermittelt über die Schwenkarme - eine Drehung der jeweiligen Türflügel. Gleichzeitig oder nachgelagert zur Schwenkbewegung des Türflügels, können diese mittels einer Führungseinheit entlang der Fahrzeuglängsachse L verschoben werden. Bei Öffnen einer zweiflügligen Schwenkschiebetüre werden die Türflügel beim Öffnen entlang der Fahrzeuglängsachse L voneinander wegbewegt, sie werden also in entgegengesetzter Richtung verschoben. Beim Schließen bewegen sich die Türflügel hingegen aufeinander zu.

Bekannte Trittsysteme wirken insofern mit dem vorangehend erläuterten Schwenkschiebetürsystem zusammen, als die Trittsysteme beim Öffnen der Tür aus einer eingefahrenen Stellung ausgefahren werden, um die Spaltbreite zwischen Fahrzeug und Haltesteig 10 zu reduzieren und eine Trittfläche 8 für den Fahrgast bereitzustellen. Die Reduzierung der Breite eines solchen Spalts S vermöge eines Trittsystems ist schematisch in den Figuren 5 und 6 wiedergegeben. Auf weitere Einzelheiten wird an späterer Stelle genauer eingegangen. Häufig weisen die Trittsysteme - die bekanntermaßen als Schiebetrittsystem oder Klapptrittsystem ausgeführt sein können - einen eigenen elektromotorischen Antrieb auf. Dies bringt jedoch die eingangs erläuterten Nachteile mit sich.

Bei der Antriebseinrichtung kann es sich beispielsweise um eine elektromotorische Antriebseinheit handeln, die eine kombinierte Schwenk-Schiebebewegung des jeweiligen Türflügels ausführt. Dabei kann jedem Türflügel eine eigene Antriebseinheit zugeordnet sein, oder aber die Drehsäulen der beiden Türflügel werden über eine gemeinsame Antriebseinheit angetrieben.

Die Figur 1 gibt das erfindungsgemäße Trittsystem in seinem ausgefahrenen Zustand wieder, d.h. eine dem Trittsystem zugehörige Trittplatte 2 ist in Richtung eines (in Figur 1 nicht dargestellten Haltesteigs 10, siehe aber Darstellung nach Figur 5 und 6) ausgefahren. Die Trittplatte 2 befindet sich in einer ausgefahrenen Stellung, d.h. die (nicht dargestellten) Türflügel des Schwenkschiebetürsystems befinden sich im geöffneten Zustand. Wie die Figur 1 weiter zu erkennen gibt, stellt die Trittplatte 2 eine Trittfläche 8 bereit, welche als Einstiegshilfe für einen Fahrgast dient. Beim Ein- oder Aussteigen in das Fahrzeug kann der Fahrgast seinen Fuß auf der Trittfläche 8 positionieren und die Trittfläche 8 mit seinem Körpergewicht belasten. Die Trittfläche 8 stellt also einen Zwischentrittbereich zwischen Haltesteig 10 und Fahrzeug bereit. Die Trittplatte 2 weist ihre größte Ausdehnung entlang der Fahrzeuglängsachse L auf. Sie kann im Bereich der Trittfläche 8 als Trittleiste ausgestaltet sein. In Richtung des nicht dargestellten Haltesteigs 10 schließt die Trittplatte 2 mit einer sich ebenfalls entlang der Fahrzeuglängsachse L erstreckenden Leiste 4 ab. Die Leiste 4 liegt dem Haltesteig 10 in der Halteposition des Fahrzeugs stirnseitig gegenüber. Die dargestellte Trittplatte 2 ist als Schiebetrittplatte ausgebildet und wird durch eine Schiebebewegung entlang einer quer zur Fahrzeuglängsachse L verlaufenden Verschiebeachse V von einer eingefahrenen Stellung (siehe Figur 2) in eine ausgefahrene Stellung (Figur 1) bewegt.

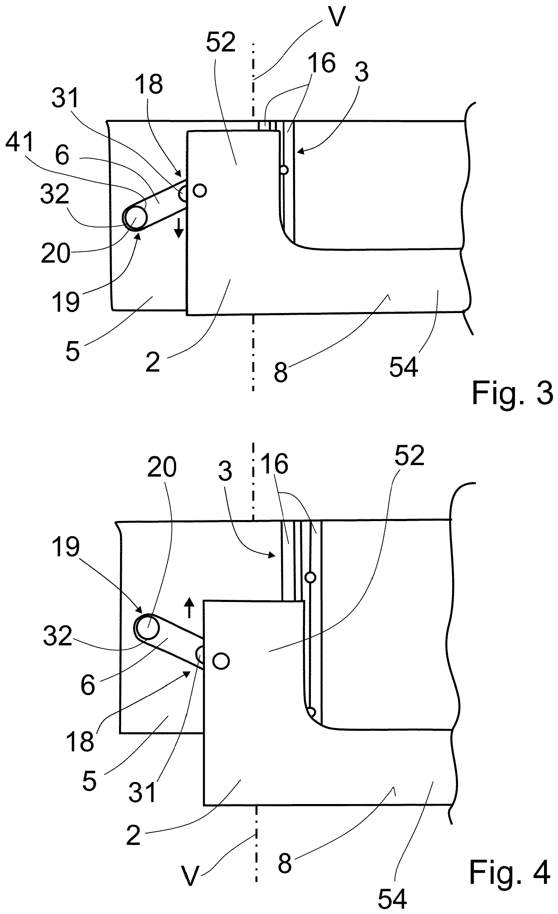

Die Trittplatte 2 bzw. Trittfläche 8 ist in der eingefahrenen Stellung von einer Bodenbedeckung 14 des Fahrzeuginnenraums bedeckt, im Umkehrschluss bedeutet dies, dass die Trittplatte 2 unterhalb der Bodenbedeckung 14 angeordnet ist (siehe insbesondere Figur 2). Unterhalb der Trittplatte 2 ist eine Bodenwanne 5 vorgesehen, die sich entlang der Verschiebeachse V erstreckende Führungsschienen 16 aufweist (Fig. 3, 4), entlang welcher die Trittplatte 2 beweglich geführt ist. Aus der Zusammenschau der Figuren 1 bis 4 wird deutlich, dass zwei Drehsäulen 1 des (nicht dargestellten) Schwenkschiebetürsystems mit der Trittplatte 2 wirkverbunden sind. Eine Drehung der Drehsäulen 1 beim Öffnen der Türflügel des Schwenkschiebetürsystems führt erfindungsgemäß zu einer Ausfahrbewegung der Trittplatte 2 in Richtung des Haltesteigs 10. Dabei wird eine Drehbewegung der Drehsäulen 1 in eine translatorische Linearbewegung der Trittplatte umgesetzt. Dies wird über einen noch näher zu erläuternden Verschiebemechanismus vollzogen.

Die Figur 3 gibt in einer schematischen Draufsicht einen Teilausschnitt des erfindungsgemäßen Trittsystems in seiner eingefahrenen Stellung wieder. In der Figur 4 hingegen ist ebenfalls in einer schematischen Draufsicht ein Teilausschnitt des der Erfindung zugrunde liegenden Trittsystems wiedergegeben, jedoch in seiner ausgefahrenen Stellung (vgl. hierzu auch Fig. 1). Wie die Figuren 3 und 4 zeigen, ist ein Verbindungsglied 6 - dieses kann auch als Verbindungshaken bezeichnet werden - mit einem ersten Ende 18 an der Trittplatte 2 befestigt. Mit einem zweiten Ende 19 steht das Verbindungsglied in Wirkverbindung mit der Drehsäule 1. Am ersten Ende 18 und am zweiten Ende 19 des Verbindungsgliedes 6 ist eine erste Lochöffnung 31 respektive eine zweite Lochöffnung 32 vorgesehen. Über die erste Lochöffnung 31 ist das Verbindungsglied 6 an der Trittplatte 2 befestigt, beispielsweise über einen in die erste Lochöffnung 31 eingreifenden und an der Trittplatte 2 befestigten Bolzen. Die erste Lochöffnung 31 kann als Langloch ausgebildet sein.

Eine sich senkrecht zu dem Verbindungsglied 6 erstreckende Verbindungswelle 20 (dargestellt bzw. angedeutet in den Figuren 1 bis 4) greift mit ihrem einen Ende 41 in die zweite Lochöffnung 32 des Verbindungsgliedes 6 ein und ist drehfest mit diesem verbunden. Die drehfeste Verbindung kann beispielsweise über eine Schraubverbindung oder Schweißverbindung verwirklicht sein.

Mit ihrem anderen Ende 42 ist die Verbindungswelle 20 über ein erstes Kardangelenk 21, ein zweites Kardangelenk 22 und ein zwischen dem ersten und zweiten Kardangelenk 21, 22 angeordnetes Gestänge 50 mit der Drehsäule 1 verbunden (verwiesen sei auf die Detaildarstellung in Figur 2). Das erste Kardangelenk 21, das zweite Kardangelenk 22 und das Gestänge 50 stellen ein winkelausgleichendes Element zwischen der Drehsäule 1 und der mit dem Verbindungsglied 6 verbundenen, senkrecht aufstehenden Verbindungswelle 20 dar.

Eine beim Öffnen der Türflügel ausgeführte Drehbewegung der Drehsäule 1 bzw. Drehsäulen 1 wird über die Anordnung aus erstem und zweiten Kardangelenk 21, 22 sowie dem Gestänge 50 auf die Verbindungswelle 20 übertragen, die infolgedessen ebenfalls in eine Drehbewegung versetzt wird. Aufgrund der drehfesten Verbindung zwischen Verbindungswelle 20 und Verbindungsglied 6 führt eine Drehbewegung der Verbindungswelle 20 zu einer Rotation des Verbindungsgliedes 6. Das Verbindungsglied 6 rotiert sodann mit der Verbindungswelle 20 mit. Ausgehend von der in Fig. 3 dargestellten, eingefahrenen Stellung der Trittplatte 2, führt eine Drehbewegung der Drehsäule 1 bzw. der damit wirkverbundenen Verbindungswelle 20 zu einer Rotationsbewegung des Verbindungsgliedes 6 in Pfeilrichtung. Selbiges gilt für eine ausgehend von der in Figur 4 wiedergegebenen ausgefahrenen Stellung der Trittplatte 2 in Richtung der eingefahrenen Stellung ausgeführte Verschiebebewegung. Sodann wird das Verbindungsglied aufgrund der sich schließenden Türflügel und einer entsprechenden Drehung der Drehsäule 1, sowie der damit wirkverbundenen Verbindungswelle 20, in Richtung der in Fig. 4 wiedergegebenen Pfeilrichtung rotiert.

Es sei betont, dass bei einer zweiflügeligen Schwenkschiebetüre beide Drehsäulen 1 mit der Trittplatte 2 wirkverbunden sind (siehe auch die Darstellung in Figur 1). Die Verbindungsglieder 6 sind spiegelsymmetrisch angeordnet und jeweils mit einem Endbereich der Trittplatte 2 verbunden. Wie in den Figuren 3 und 4 angedeutet, hat die Trittplatte 2 bei Draufsicht eine U-förmige Gestalt. Die Verbindungsglieder 6 sind im Bereich von Schenkelabschnitten 52 der U-förmigen Trittplatte 2 mit dieser verbunden, wobei die Schenkelabschnitte 52 einstückig an jenen die Trittfläche 8 bereitstellenden Mittelabschnitt 54 anschließen. Beim Drehen der Drehsäulen 1 - sei es beim Öffnen oder Schließen der Türflügel - nehmen die Verbindungsglieder 6 die Trittplatte 2 mit und bewirken eine Verschiebebewegung entlang der Verschiebeachse V.

Wie ebenfalls in den Figuren 3 und 4 dargestellt, ist im Bereich der Bodenwanne 5 eine Führungsvorrichtung 3 zur beweglichen Führung der Trittplatte 2 vorgesehen. Die Führungsvorrichtung 3 umfasst an der Bodenwanne 5 montierte und damit fahrzeugfest angeordnete Führungsschienen 16. In diese greifen an der Trittplatte 2 angeordnete Führungselemente (nicht dargestellt) ein. Die in die Schienen 16 eingreifenden Führungselemente gleiten bei der Verschiebebewegung der Trittplatte 2 entlang der Führungsschienen 16. Dazu kann an den Führungsschienen eine Führungsnut vorgesehen sein. Führungselemente können beispielsweise in Form eines Führungsstifts oder einer Führungsleiste ausgebildet sein. Die Führungselemente können einstückig an die Trittplatte 2 angeformt sein, oder lösbar mit dieser verbunden sein, beispielsweise über eine Schraubverbindung. Vorzugsweise ist die Führungsvorrichtung 3 als Gleitlager ausgestaltet, jedoch kommt grundsätzlich auch eine Ausgestaltung als Rollenlager in Betracht. Weiterhin ist auch eine anderweitige Ausgestaltung des Gleitlagers möglich, beispielsweise als schwimmendes Stützlager.

Wie bereits vorangehend erwähnt und in den Figuren 5 und 6 illustriert, dient das Trittsystem dazu einen Spalt S zwischen dem den in der Halteposition befindlichen Fahrzeug bzw. der Fahrzeugaußenseite 9 und dem Haltesteig 10 zu verkleinern, nämlich von einer Spaltbreite S₁ (diese gibt den Abstand zwischen der Fahrzeugaußenseite 9 und der dem Fahrzeug zugewandten Außenkante des Haltesteigs 10 im ungeöffneten Zustand der Türflügel wieder) auf eine Spaltbreite S₂ (diese gibt den Abstand zwischen der dem Fahrzeug zugewandten Außenkante des Haltesteigs 10 und der Leiste 4 der Trittplatte 2 wieder). Die Spaltbreite S₂ berechnet sich aus der Differenz der Spaltbreite S₁ und der Länge des tatsächlichen Ausfahrweges W der Trittplatte 2 des Trittsystems entspricht.

Figur 5 zeigt den Zustand des Trittsystems mit der Trittplatte 2 in der eingefahrenen Stellung, während die Figur 6 das Trittsystem mit der Trittplatte 2 in der (zumindest teilweise) ausgefahrenen Stellung zeigt. Da der Abstand des Haltesteiges 10 vom Fahrzeug aufgrund verschiedener lokaler Gegebenheiten von Bahnhöfen variieren kann, mag vorgesehen sein, die Trittplatte 2 nicht vollständig auszufahren. Dazu können in der Trittplatte 2 oder am Fahrzeug Abstandssensoren vorgesehen sein, die den Abstand des Fahrzeugs vom Haltesteig 10 erfassen. In Abhängigkeit des erfassten Abstandes kann eine gewünschte Ausfahrweite W steuer- und regelungstechnisch verwirklicht werden. Dies kann mit einer mechanischen Entkopplungseinrichtung zwischen der Drehsäule 1 und der Verbindungswelle 20 kombiniert werden. Dadurch ist ermöglicht, dass sich Drehsäule 1 zur vollständigen Öffnung der Türflügel bei Erreichen der gewünschten Ausfahrweite W der Trittplatte 2 weiterdrehen kann und nicht blockiert. Der gleiche Grundsatz kann eine Entkopplung der Drehbewegung zwischen Drehsäule 1 und Verbindungswelle 20 ermöglichen, was beispielsweise im Falle eines Anstoßens der Trittplatte 2 an dem Haltesteig 10 zu einer Unterbrechung des Türöffnungsvorgangs führen könnte (sofern die Türflügel im Zeitpunkt des Anstoßens nicht bereits vollständig geöffnet sind).

### Bezugszeichenliste

- 1: Drehsäule
- 2: Trittplatte
- 3: Führungsvorrichtung
- 4: Leiste
- 5: Bodenwanne
- 6: Verbindungsglied
- 8: Trittfläche
- 9: Außenseite
- 10: Haltesteig, Bahnsteig
- 14: Bodenbedeckung
- 16: Führungsschienen
- 18: erstes Ende (Anbindung an Trittplatte)
- 19: zweites Ende (Anlenkung an Drehsäule)
- 20: Verbindungswelle
- 21: erstes Kardangelenk
- 22: zweites Kardangelenk
- 31: erste Lochöffnung
- 32: zweite Lochöffnung
- 41: Ende
- 42: Ende
- 50: Gestänge
- 52: Schenkelabschnitt
- 54: Mittelabschnitt

- D: Drehachse
- L: Fahrzeuglängsachse
- S: Spalt
- S₁: Spaltbreite (eingefahrene Trittplatte)
- S₂: Spaltbreite (ausgefahrene Trittplatte)
- V: Verschiebeachse
- W: Ausfahrweg

## Patentansprüche

1. Schwenkschiebetür für ein Fahrzeug, insbesondere ein Schienenfahrzeug, wobei die Schwenkschiebetür zumindest einen mit einer Drehsäule (1) verbundenen Türflügel aufweist und ein mit der Schwenkschiebetür zusammenwirkendes Trittsystem umfasst, wobei der Türflügel beim Öffnen und Schließen zumindest teilweise um die mit dem Türflügel verbundene Drehsäule (1) verschwenkt wird, und wobei das Trittsystem umfasst:
- eine als Schiebetritt ausgebildete Trittplatte (2), die im Wege einer Linearbewegung entlang einer Verschiebeachse (V) reversibel von einer eingefahrenen Stellung in Richtung einer ausgefahrenen Stellung verschiebbar ist,
- eine Gelenkanordnung,
- und eine fahrzeugseitig angeordnete Führungsvorrichtung (3), in welcher die Trittplatte (2) verschiebbar gelagert ist,
**dadurch gekennzeichnet, dass** die Trittplatte (2) über die Gelenkanordnung mit der oder zumindest einer der Drehsäulen (1) verbunden ist, wobei über die Gelenkanordnung eine Drehbewegung der Drehsäule (1) in die Linearbewegung der Trittplatte (2) übertragbar ist, wobei die Gelenkanordnung ein Verbindungsglied (6), eine Verbindungswelle (20), ein erstes (21) und ein zweites Kardangelenk (22), sowie ein die Kardangelenke (21, 22) verbindendes Gestänge (50) umfasst, wobei das Verbindungsglied (6) ein metallisches Flachprodukt ist und im Bereich seines ersten Endes (18) sowie seines zweiten Endes (19) eine erste Lochöffnung (31) respektive eine zweite Lochöffnung (32) aufweist, wobei das Verbindungsglied (6) im Bereich der ersten Lochöffnung (31) mit der Trittplatte (2) verbunden ist, und wobei die Verbindungswelle (20) senkrecht zu dem Verbindungsglied (6) angeordnet ist und mit ihrem einen Ende (41) in die zweite Lochöffnung (32) des Verbindungsgliedes (6) eingreift.

2. Schwenkschiebetür nach Anspruch 1, **dadurch gekennzeichnet, dass** sich die Trittplatte (2) in der ausgefahrenen Stellung befindet, sofern die zumindest eine Drehsäule (1) ausgehend von einer zur geschlossenen Stellung des zumindest einen Türflügels korrespondierenden Drehposition um einen Drehwinkel gedreht ist, bevorzugt um einen Drehwinkel von 40°-60°, und besonders bevorzugt um einen Drehwinkel von 50°.

3. Schwenkschiebetür nach Anspruch 1, **dadurch gekennzeichnet, dass** die Verbindungswelle (20) drehfest mit dem Verbindungsglied (6) verbunden ist.

4. Schwenkschiebetür nach einem der Ansprüche 1 oder 3, **dadurch gekennzeichnet, dass** das erste Kardangelenk (21) mit einem anderen Ende (42) der Verbindungswelle (20) sowie mit einem ersten Ende eines Gestänges (50) verbunden ist, und dass das zweite Kardangelenk (22) mit einem zweiten Ende des Gestänges (50) sowie mit der Drehsäule (1) verbunden ist.

5. Schwenkschiebetür nach einem der Ansprüche 1, oder 3 bis 4, **dadurch gekennzeichnet, dass** das Gestänge (50) relativ zu der Verbindungswelle (20) um einen Winkel geneigt ist, bevorzugt um einen Winkel von 30°-60°, weiter bevorzugt um einen Winkel von 40°-50°, und besonders bevorzugt um einen Winkel von 45°.

6. Schwenkschiebetür nach einem der Ansprüche 1 bis 5, **dadurch gekennzeichnet, dass** das Verbindungsglied (20) dazu ausgebildet ist, beim Drehen der zumindest einen Drehsäule (1) mitgedreht zu werden und die Trittplatte (2) zu verschieben.

7. Schwenkschiebetür nach einem der vorangehenden Ansprüche, **dadurch gekennzeichnet, dass** zwischen der Drehsäule (1) und der Trittplatte (2) eine Entkopplungseinrichtung vorgesehen ist, die dazu eingerichtet ist, ein Blockieren der Drehsäule (1) bei Erreichen einer definierten Ausfahrweite der Trittplatte (2) und/oder beim Anschlagen der Trittplatte (2) an einem Haltesteig (10) zu verhindern.

## Claims

1. A pivoting sliding door for a vehicle, in particular a rail vehicle, wherein the pivoting sliding door has at least one door leaf connected to a rotary column (1), and a step system cooperating with the pivoting sliding door, wherein the door leaf, during opening and closing, is pivoted at least partially about the rotary column (1) which is connected to the door leaf, and wherein the step system comprises:
- a step plate (2), configured as a sliding step, which by means of a linear movement along a displacement axis (V) is displaceable reversibly from a retracted position in the direction of an extended position,
- an articulated arrangement,
- and a guide device (3), arranged on the vehicle side, in which the step plate (2) is displaceably mounted,
**characterized in that** the step plate (2) is connected via the articulated arrangement to the or at least to one of the rotary columns (1), wherein via the articulated arrangement a rotary movement of the rotary column (1) is able to be transferred into the linear movement of the step plate (2), wherein the articulated arrangement comprises a connecting member (6), a connecting shaft (20), a first (21) and a second cardan joint (22), and a linkage (50) connecting the cardan joints (21, 22), wherein the connecting member (6) is a metallic flat product and has in the region of its first end (18) and of its second end (19) a first hole opening (31) or respectively a second hole opening (32), wherein the connecting member (6) in the region of the first hole opening (31) is connected to the step plate (2), and wherein the connecting shaft (20) is arranged perpendicularly to the connecting member (6) and engages with its one end (41) into the second hole opening (32) of the connecting member (6).

2. The pivoting sliding door according to Claim 1, **characterized in that** the step plate (2) is situated in the extended position, in so far as the at least one rotary column (1), proceeding from a rotation position corresponding to the closed position of the at least one door leaf, is rotated through a rotation angle, preferably through a rotation angle of 40°-60°, and particularly preferably through a rotation angle of 50°.

3. The pivoting sliding door according to Claim 1, **characterized in that** the connecting shaft (20) is connected to the connecting member (6) in a rotationally fixed manner.

4. The pivoting sliding door according to one of Claims 1 or 3, **characterized in that** the first cardan joint (21) is connected with another end (42) of the connecting shaft (20) and with a first end of a linkage (50), and that the second cardan joint (22) is connected with a second end of the linkage (50) and with the rotary column (1).

5. The pivoting sliding door according to one of Claims 1, or 3 to 4, **characterized in that** the linkage (50) is inclined relative to the connecting shaft (20) by an angle, preferably by an angle of 30°-60°, further preferably by an angle of 40° - 50°, and particularly preferably by an angle of 45°.

6. The pivoting sliding door according to one of Claims 1 to 5, **characterized in that** the connecting member (20) is configured to be co-rotated during rotating of the at least one rotary column (10) and to displace the step plate (2).

7. The pivoting sliding door according to one of the preceding claims, **characterized in that** between the rotary column (1) and the step plate (2) a decoupling device is provided, which is configured to prevent a blocking of the rotary column (1) on reaching a defined extension distance of the step plate (2) and/or on abutting of the step plate (2) on a stop platform (10).

## Revendications

1. Porte pivotante coulissante pour un véhicule, en particulier un véhicule ferroviaire,
sachant que la porte pivotante coulissante comporte au moins un battant de porte relié à une colonne rotative (1) et comprend un système de marchepied coopérant avec la porte pivotante coulissante, sachant que le battant de porte est pivoté lors de l'ouverture et de la fermeture au moins en partie autour de la colonne rotative (1) reliée au battant de porte et sachant que le système de marchepied comprend :
- une plaque de marchepied (2) constituée sous la forme d'un marchepied coulissant, qui peut être déplacée au cours d'un mouvement linéaire le long d'un axe de déplacement (V) de façon réversible d'une position rentrée en direction d'une position déployée,
- un agencement articulé,
- et un dispositif de guidage (3) disposé côté véhicule, dans lequel la plaque de marchepied (2) est logée pouvant être déplacée,
***caractérisée en ce que*** la plaque de marchepied (2) est reliée par l'agencement articulé avec la ou au moins à une des colonnes rotatives (1), sachant que par le biais de l'agencement articulé, un mouvement de rotation de la colonne rotative (1) peut être transféré dans le mouvement linéaire de la plaque de marchepied (2), sachant que l'agencement articulé comprend un organe de liaison (6), un arbre de liaison (20), un premier (21) et un deuxième joint de cardan (22), ainsi qu'une tringlerie (50) reliant les joints de cardan (21, 22), sachant que l'organe de liaison (6) est un produit plat métallique et comporte dans la zone de sa première extrémité (18) ainsi que de sa deuxième extrémité (19) une première ouverture (31) et respectivement une deuxième ouverture (32), sachant que l'organe de liaison (6) est relié dans la zone de la première ouverture (31) à la plaque de marchepied (2) et sachant que l'arbre de liaison (20) est disposé perpendiculairement à l'organe de liaison (6) et vient en prise avec son extrémité (41) dans la deuxième ouverture (32) de l'organe de liaison (6).

2. Porte pivotante coulissante selon la revendication 1, ***caractérisée en ce que*** la plaque de marchepied (2) se trouve dans la position déployée dans la mesure où au moins une colonne rotative (1) est tournée d'un angle de rotation, de préférence d'un angle de rotation de 40°- 60° et en particulier de préférence d'un angle de rotation de 50°, en partant d'une position de rotation correspondant à la position fermée d'au moins un battant de porte.

3. Porte pivotante coulissante selon la revendication 1, ***caractérisée en ce que*** l'arbre de liaison (20) est relié solidaire en rotation à l'organe de liaison (6).

4. Porte pivotante coulissante selon l'une quelconque des revendications 1 ou 3, ***caractérisée en ce que*** le premier joint de cardan (21) est relié à une autre extrémité (42) de l'arbre de liaison (20) ainsi qu'à une première extrémité d'une tringlerie (50) et **en ce que** le deuxième joint de cardan (22) est relié à une deuxième extrémité de tringlerie (50) ainsi qu'à la colonne rotative (1).

5. Porte pivotante coulissante selon l'une quelconque des revendications 1, ou 3 à *4, **caractérisée en ce que*** la tringlerie (50) est incliné d'un angle par rapport à l'arbre de liaison (20), de préférence d'un angle de 30°- 60°, de préférence en plus d'un angle de 40°- 50° et en particulier de préférence d'un angle de 45°.

6. Porte pivotante coulissante selon l'une quelconque des revendications 1 à *5, **caractérisée en ce que*** l'organe de liaison (20) est constitué pour être tourné conjointement lors de la rotation d'au moins une colonne rotative (1) et pour déplacer la plaque de marchepied (2).

7. Porte pivotante coulissante selon l'une quelconque des revendications précédentes, ***caractérisée en ce qu'un*** dispositif de découplage est prévu entre la colonne rotative (1) et la plaque de marchepied (2), qui est agencé pour éviter un blocage de la colonne rotative (1) lors de l'atteinte d'une largeur de déploiement définie de la plaque marchepied (2) et/ou lors de la butée de la plaque de marchepied (2) sur une plateforme d'arrêt (10).
